Europäisches Patentamt

European Patent Office

Office européen des brevets

(11) Publication number: 0 342 062 A2

# EUROPEAN PATENT APPLICATION

(21) Application number: 89304861.1

(22) Date of filing: 12.05.89

(51) Int. Cl.⁴: G 06 K 9/18

(30) Priority: 12.05.88 JP 115515/88
19.09.88 JP 121672/88
25.10.88 JP 269014/88
13.12.88 JP 312797/88

(43) Date of publication of application:
15.11.89 Bulletin 89/46

(84) Designated Contracting States: DE FR GB NL

(71) Applicant: FUJITSU LIMITED
1015, Kamikodanaka Nakahara-ku
Kawasaki-shi Kanagawa 211 (JP)

(72) Inventor: Endoh, Michiko
17-28, Shimosueyoshi 6-chome Tsurumi-ku
Yokohama-shi Kanagawa 230 (JP)

Kurashima, Shigemi
Sakai-so 2F 3, 663, Kamikodanaka Nakahara-ku
Kawasaki-shi Kanagawa 211 (JP)

Wakatsuki, Noboru
1540-1-3-402, Nakanoshima
Tama-Kawasaki-shi Kanagawa 214 (JP)

Ueoka, Tadashi Dai 7 Imura-so 205, 210
Shimokodanaka Nakahara-ku
Kawasaki-shi Kanagawa 211 (JP)

Fujimura, Takashi
4-19-1-504, Asakusabashi
Taito-ku Tokyo 111 (JP)

Matsumoto, Tsutomu
4-9-7, Nakakaigan
Chigasaki-shi Kanagawa 253 (JP)

(74) Representative: Fane, Christopher Robin King et al
HASELTINE LAKE & CO. Hazlitt House 28 Southampton
Buildings Chancery Lane
London, WC2A 1AT (GB)

(54) Recognising patterns printed in magnetizable ink.

(57) A device for recognising a pattern (61a) printed in magnetizable ink on a recording medium (61) comprises magnetizing means (65) for magnetizing the said pattern (61a), and conveying means (64) for causing the magnetized pattern (61a) to be scanned by magnetic-field sensing means (66) of the device, which sensing means (66) are operable to sense the magnetic field generated by the magnetized pattern (61a). Output signals produced by the magnetic-field sensing means (66) are delivered to signal processing means (67) of the device, which processing means (67) are operable to effect a comparison between the pattern sensed and a preselected set of standard patterns. The sensitivity and resolution of such a device can be greater than those of previously-proposed devices for recognising magnetic patterns.

Fig. 8

EP 0 342 062 A2

**Description**

## RECOGNISING PATTERNS PRINTED IN MAGNETIZABLE INK

The present invention relates to recognising patterns printed in magnetizable ink, and more particularly to devices whereby such patterns may be detected and recognised, for example computer input equipment employing techniques for identifying and interpreting printed characters and marks on documents by which the characters and marks printed in magnetic ink are read for their bit pattern representations for a computer input.

Magnetic ink contains iron oxide powder and is capable of forming a magnetizable surface coating when printed on a recording medium. Patterns printed on a recording medium using magnetic ink are known for many different uses, one of which is the detection of imitation or counterfeit printed items by means of accurate recognition of the printed magnetic pattern.

Owing to the sophisticated techniques employed by present-day counterfeiters, a pattern recognition device is nowadays preferably designed not only for a single purpose of recognition, for example as an optical character recognition device, but also for other types of recognition methods, for example also for the use of a magnetic character recognition method. In this respect, increasingly greater use is being made of a wide range of printed magnetic patterns in order to obtain more recognition information. For this reason, it is preferable to provide a device in which a plurality of magnetic detectors are arranged in a linear array so as to detect a magnetic pattern more accurately and in which the resolution is such as to permit accurate recognition of high density magnetic patterns.

A typical type of previously-proposed semiconductor magnetoresistive sensor for detecting magnetic patterns employs a permanent magnet, for producing a biasing magnetic field, and a magnetic sensor which is operable to detect a perturbation in the magnetic flux density of that permanent magnet caused by the pattern.

Such a previously-proposed semiconductor magnetoresistive sensor has multifarious disadvantages: amongst these are that the sensitivity of the sensor element cannot be improved; that as a semiconductor chip used to make the sensor is made by slice cutting of a crystal, the sensor cannot be mass-produced and there can be wide variation in the resistance value from sensor to sensor; that the magnet must produce a high biasing magnetic field which has a strength of many hundreds of oersted; and that the magnet readily attracts magnetic powder, or magnetically-susceptible dust, and so tends to operate like a dust catcher.

Further, there is a problem that, when a plurality of detectors are lined up in an array in such a way as to be able to recognize a magnetic pattern printed over a wide area, the dimension of the whole detector cannot be made less than 2 mm owing to the presence of the permanent magnet, and accordingly it is difficult to achieve a resolution of less than 2 mm. Further, it is difficult to obtain magnetic sensors having uniform output characteristics of their respective resistance values.

Accordingly, it is desirable to provide a magnetic ink printed pattern recognition device which can overcome the above-mentioned problems, whilst enabling a magnetic printed pattern to be recognized over a wide area with high accuracy and high resolution.

A magnetic ink printed pattern recognition device for transferring a recorded medium printed with a magnetic pattern in magnetic ink and embodying the present invention includes transfer means for transferring the recorded medium printed with a magnetic pattern to be detected in magnetic ink; magnetizing means for magnetizing said magnetic pattern on said recorded medium; magnetic sensing means for detecting a magnetic field of said magnetic pattern magnetized by said magnetizing means; and an output signal processor circuit for processing an output signal from said magnetic sensing means.

Reference will now be made, by way of example, to the accompanying drawings, in which:-

Figure 1(A) is a schematic diagram of a previously-proposed device;

Figure 1(B) is a diagram for use in explaining the operational principle of the device shown in Fig. 1(A);

Figs. 2 and 3 are diagrams for use in explaining the operational principle of a device embodying the present invention;

Fig. 4 is a graph;

Figs. 5(A) and 5(B) show respective plan views of portions of a device embodying the present invention;

Figs. 6(A), 6(B), 6(C) and 6(D) are circuit diagrams;

Figs. 7(A) and 7(B) show respective perspective views of two devices embodying the present invention;

Fig. 8 shows a perspective view of another device embodying the present invention;

Fig. 9 shows a view of a portion of the device of Fig. 8;

Fig. 10 shows a perspective view of another portion of the device of Fig. 8;

Fig. 11 is a block diagram of yet another portion of the device of Fig. 8;

Fig. 12(A) shows a plan view of a portion of a previously-considered device;

Fig. 12(B) shows a perspective view of such a previously-considered device;

Fig. 12(C) shows a cross-sectional view taken along the line b-b in Fig. 12(B);

Fig. 13(A) shows a perspective view of a portion of a device embodying the present invention;

Fig. 13(B) shows a sectional view of the portion shown in Fig. 13(A);

Fig. 14(A) shows an exploded perspective view of a portion of another device embodying the present invention;

Fig. 14(B) shows an assembled perspective view of the portion shown in Fig. 14(A);

Fig. 15 shows a perspective view of part of the portion of Fig. 14;

Fig. 16 shows a perspective view of a portion of a device embodying the present invention;

Fig. 17 shows a schematic diagram of the device of Fig. 16;

Fig. 18 shows a top plan view of another portion of the device shown in Fig. 17;

Figs. 19(A) and 19(B) are graphs;

Fig. 20(A) is a diagram for use in explaining a previously-considered method of recognizing a magnetic ink printed pattern;

Fig. 20(B) shows a perspective view of a portion of a further device embodying the present invention;

Fig. 20(C) shows a cross-sectional view of part of the device of Fig. 20(B);

Fig. 20(D) is a diagram showing in more detail the portion shown in Figs. 20(B) and 20(C);

Figs. 21(A) and 21(C) are graphs;

Fig. 21(B) is a diagram showing a portion of a device embodying the present invention;

Fig. 22(A) shows a cross-sectional view of yet another device embodying the present invention;

Fig. 22(B) shows a perspective view of part of the device shown in Fig. 22(A);

Fig. 22(C) shows a perspective view of a portion of the part shown in Fig. 22(B); and

Fig. 22(D) is a graph.

A previously-proposed recognition device employs a permanent magnet, for producing a biasing magnetic field, in conjunction with a magnetic detector, the device utilizing the fact that the density of the magnetic flux originating from the permanent magnet will be perturbed by a magnetic pattern to be recognised, and accordingly using the magnetic detector to detect such perturbation.

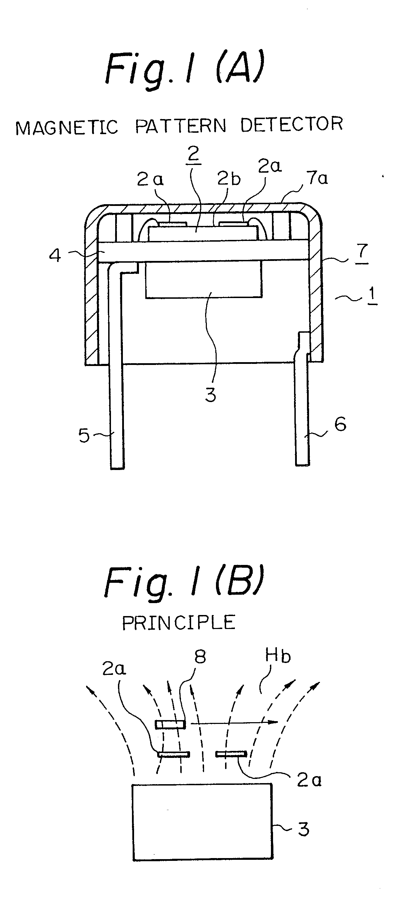

Figure 1(A) is a diagram showing the structure of such a general-purpose magnetic pattern detector, and Fig. 1(B) is a diagram for explaining the principle behind that detector.

In Fig. 1(A), a magnetic pattern detector denoted by reference numeral 1 comprises a magnetoresistive element 2 and a permanent magnet 3 both mounted on a substrate 4 which is accommodated in a package 7 from which lead terminals 5 and 6 are led away. The permanent magnet 3 produces a bias magnetic field which extends outside the detector 1 and faces a face 7a of the package 7 incorporating the detector element 2, which face 7a is in contact with a recording medium bearing the magnetic pattern to be recognised. The semiconductor magnetoresistive element 2 comprises a pair of semiconductor chips 2a mounted on a substrate 2b.

As will now be explained with reference to Fig. 1(B), when the magnetic pattern 8 on a recording medium is adjacent to the permanent magnet 3, a bias magnetic field $H_b$ from the permanent magnet 3 is drawn from the magnetic pattern 8 to produce a perturbation in the magnetic flux density which is detected by one of the chips 2a of the detector 2.

Such a detector 1 must have a permanent magnet 3 which can produce a bias magnetic field $H_b$ having a strength which is more than several hundreds oersted. The semiconductor chip 2a typically comprises a slice of crystal such as antimony indium InSb.

As mentioned previously, a previously-proposed magnetic detector 1 having a semiconductor magnetoresistive element 2 and a permanent magnet 3 has the following problems: that is that the sensitivity of the semiconductor magnetoresistive element 2 is not susceptible to significant improvement; that the semiconductor chips 2a, which are formed from slices of crystal, cannot easily be mass-produced and that the variation of the resistance value from chip to chip is large; and that the permanent magnet 3 must be capable of producing a strong bias magnetic field H of over several hundred oersted (Oe), but that the magnet 3 then readily attracts magnetic powder, magnetically-susceptible dust, and other dust-like waste matter. In addition to these disadvantages, there is the further problem that, when a plurality of detectors 1 are arranged in a linear array in order to recognize a printed magnetic pattern which extends over a wide area, owing to the existence of the permanent magnet 3 each detector 1 cannot be made less than 2 mm in size. Therefore, it is difficult to obtain a resolution of less than 2 mm, whilst enabling a uniform output characteristic (resistance value of the magnetoresistive element 2 to be obtained.

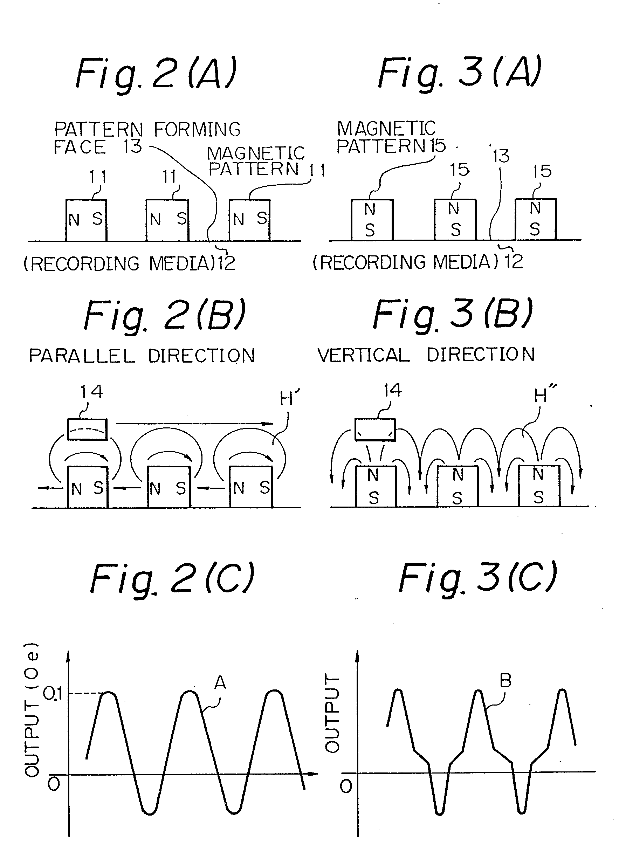

An embodiment of the present invention can overcome the above-mentioned problems. Figures 2(A), (B) and (C) and Figs. 3(A), (B) and (C) are diagrams for use in explaining the operational principle of a device embodying the present invention.

In Fig. 2(A), a printed pattern 11 in magnetizable ink (a magnetic pattern) is magnetized in a direction parallel to a printed surface 13 of a recording medium (i.e. from side to side in the Figure) by means of a permanent magnet.

As shown in Fig. 2(B), a magnetic field H', flowing parallel to the printed surface 13 outside the magnetic pattern 11, is produced by the magnetic pattern 11 and is detected by a magnetoresistive element 14 adjacent to the magnetic pattern 11.

As a result, as shown in Fig. 2(C), an output characteristic A is obtained from the magnetoresistive element 14, whose maxima are dependent upon the magnetic pattern 11, from which the magnetic pattern 11 can be recognized.

In Fig. 3(A), a printed pattern 15 in magnetizable ink (a magnetic pattern) is magnetized in a direction which is perpendicular to that of the printed surface 13 of the recording medium 12 (i.e. up and down in the Figure) by means of a permanent magnet.

As shown in Fig. 3(B), a magnetic field H", flowing vertically with respect to the printed surface 13 outside the printed pattern 15, is produced by the pattern 15 and is detected by the magnetoresistive element 14 adjacent to the magnetic pattern 15.

As a result, as shown in Fig. 3(C), an output characteristic B is obtained from the magnetoresistive element 14, the maximum peak values of which are dependent upon the arrangement distance (position) of each element of the magnetic pattern 15, from which the magnetic pattern 15 may be recognised.

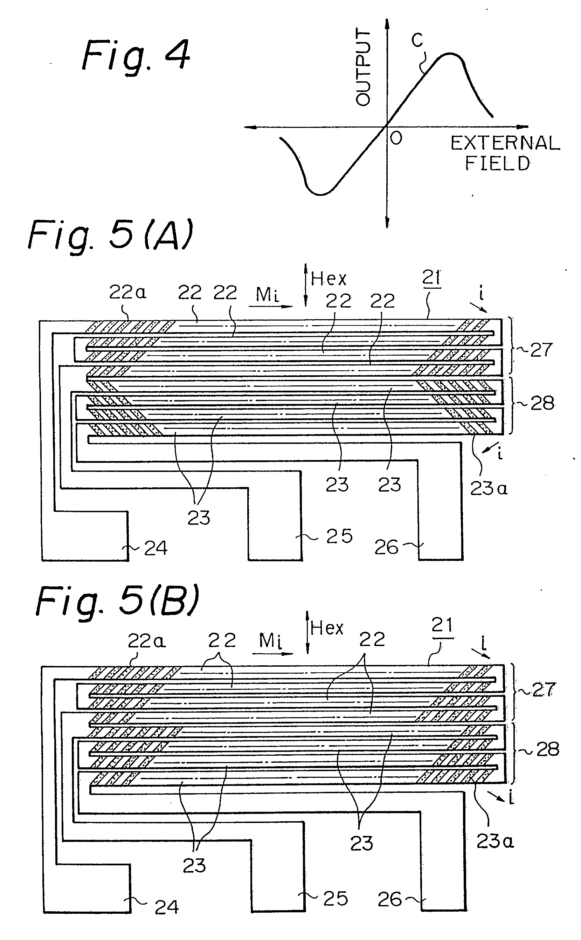

Figure 4, in which the ordinate axis represents an output and the abscissa axis represents an external magnetic field, denotes an output characteristic curve C of a magnetoresistive element utilizing the magnetoresistance of a ferromagnetic material.

An output characteristic C of a magnetoresistive element utilizing the magnetoresistance of a ferromagnetic material such as permalloy or the like is more stable to variation in temperature than an element for detecting an induction field by coils or other magnetic detection elements utilizing the Hall effect of a semiconductor or a magnetoresistive or the like, and is both considerably more sensitive in the detection of relatively small magnetic fields and significantly more susceptible to miniaturization and mass production.

Prior to detecting the magnetic pattern, the magnetic pattern is magnetized and, when a magnetic field originating from the magnetic printed pattern owing to that magnetization is detected by a magnetoresistive element utilizing the magnetoresistance of a ferromagnetic material, the outputs A and B as shown in Fig. 2 and Fig. 3 are obtained. Such a magnetic pattern recognition device can recognize the magnetic pattern without direct use of a biasing field produced by a permanent magnet, and in addition, when a plurality of such magnetoresistive elements are lined up in an array, since such elements can be made smaller than those using a permanent magnet, they can be placed closer together, thereby permitting higher resolution to be obtained.

Fig. 5(A) is a plan view showing an example of a resistor pattern in a magnetoresistive element suitable for use in an embodiment of the present invention

A resistor pattern 21 formed on a silicon substrate, on which, for example, an oxide film has been grown has a structure in which each plural magnetic detection part (a magnetic detection pattern) 22, 23 is connected with external connecting terminals 24, 25 and 26 en block.

In a plurality (four in the Figure) of magnetic detection parts 22, one terminal of a resistor part 27 connected in a zig-zag pattern form is connected with a terminal 24, and the other terminal of the resistor part 27 is connected with both a terminal 25 and one terminal of a resistor parts 28 with which a plurality of magnetic detection parts 23 are connected in a zigzag pattern form, and a terminal 26 is connected with the other terminal of the resistor 28.

A thin film of conductive material (for example, gold). which is laminated on a ferromagnetic thin film such as permalloy, is partly and selectively removed to form the resistor pattern 21. A part of the ferromagnetic pattern portion is formed by multi-striped inclined parallel stripes on the magnetic detector 22, 23 and an internal magnetic field is formed in a longitudinal direction (in the right or left direction in the Figure) by an internal magnetization $M_i$.

The pattern of conductive material is used to make a bias current i flow through the ferromagnetic pattern 22a, 23a. As shown in Fig. 5(A), when an inclination angle between the magnetic material patterns 22a and 23a is 45° in the reverse direction each other, the direction of the current i flowing through the magnetic detector part 22 is inclined by 90° to the direction of the current i flowing through the magnetic detector part 23. Therefore, the resistor pattern 21 is formed by a half-bridge type in which the outputs of the magnetic detection portion 22, 23 have each reverse direction.

As shown in Fig. 5(B), when the ferromagnetic patterns 22a and 23a are inclined in the same direction, the direction of the current flowing through the magnetic detection part 22 is the same as that of the current flowing through the magnetic detection part 23. As a result, the resistor pattern 21 becomes a half-bridge structure in which the outputs of the magnetic detection parts 22 and 23 have the same direction. When a uniform field is applied to the magnetoresistive element portions 27 and 28, the magnetoresistive element does not produce any output, whereas when different fields are applied respectively to the magnetoresistive element portions 27 and 28, the magnetoresistive element produces an output.

In general, a resistor pattern 21 having such a conductive element pattern is referred to as a "barber-pole" type. When a predetermined amount of current is applied to the terminals 24 and 26, and an external magnetic field $H_{ex}$ perpendicular to a longitudinal direction of the magnetic detection parts 22, 23 is applied thereto, a change of the resistance value of the magnetic detection parts 22, 23 due to the external field $H_{ex}$ is detected at the terminal 25, and thus the existence of the external field $H_{ex}$ can be detected by the above-described change of the resistance value. Therefore, a magnetic detector 14 having a resistor pattern 21 can, as shown in Fig. 2(B) and Fig. 3(B), detect the magnetic field H' or H" of the pre-magnetized magnetic pattern 11 or 15, and thereby recognize the magnetic pattern 11, 15. Regarding the magnetoresistive element in Fig. 5(B), only when differing magnetic fields are applied respectively to the magnetoresistive elements portions 27 and 28 by the magnetic pattern 11, 15, can the magnetic patterns 11 and 15 be recognized.

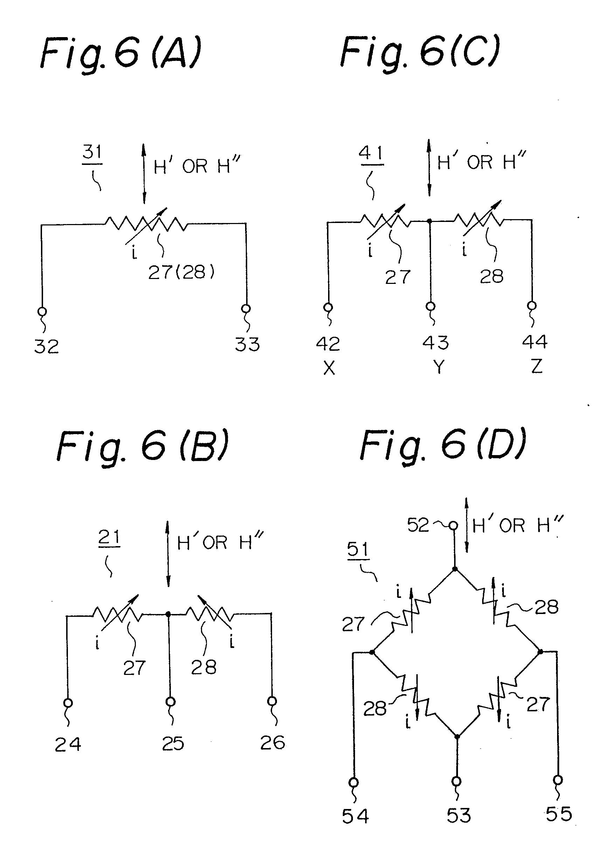

Fig. 6(A) shows a resistor pattern 31 having the least circuit structure. The resistor portion 27 or 28 to which a plurality of magnetic detector portions 22 or 23 are connected in a zigzag form, is connected at respective ends thereof to terminals 32 and 33. From either one of the terminals 32 and 33, such a resistor pattern 31 detects the change of resistance value in the resistor portion 27 due to the external field. As a magnetoresistive element 14 shown in Fig. 2 and Fig. 3 and having the resistor pattern 31 is premagnetized, it can recognize the existence of the magnetic pattern 11, 15 which produces a magnetic field H' or H" (an external magnetic field $H_{ex}$)

Fig. 6(B) is a circuit diagram of the resistor pattern 21 as shown in Fig. 5(A). The resistor pattern 21 includes a resistor portion 27, comprising a plurality of magnetic detection portions 22 in a zigzag form, and a resistor portion 28, comprising a plurality of magnetic detection portions 23 in a zigzag pattern form, and has a structure such that the phase of a bias current $i_{27}$ in the resistor portion 27 forms 45° reversely with the phase of a bias current $i_{28}$ in the resistor portion 28 to form a half-bridge constitution. The magnetoresistive element 14 of Figs. 2 and 3 having resistor patterns 21 can recognize the existence of the magnetic patterns 11 and 15 generating a magnetic field H' or H'' (an external field $H_{ex}$) owing to premagnetization with more accuracy than that of a resistor pattern 31.

Fig. 6(C), is a circuit diagram of the resistor pattern 21 (41) as shown in Fig. 5(B). A resistor pattern 41 includes a pair of resistor portions 27 and 28, and external connection terminals 42, 43 and 44, and forms a half-bridge structure. The resistor pattern 41 detects an external magnetic field $H_{ex}$ , when the external magnetic field is applied to one resistor portion 27. As a magnetoresistive element 14 of Fig. 2 and Fig. 3 and having the resistor pattern 41 does not detect any uniform external magnetic fields, which may be a source of noise, but recognizes every two times each magnetic pattern 11 and 15 producing the magnetic field H' or H'' (an external magnetic field H ) due to premagnetization, it can effect detection with a better signal-to-noise ratio.

In Fig. 6(D), a resistor pattern 51 has a full-bridge structure having each two resistor portions 27 and two resistor portions 28. When constant current flows through terminals 52 and 53, the output is obtained from terminals 54 and 55 based on the change of resistance due to the external magnetic field. Therefore, the magnetoresistive element 14 as shown in Fig. 2 and Fig. 3, and having the resistor pattern 51, can recognize each magnetic pattern 11 and 15 producing the magnetic field H' or H'' (an external magnetic field $H_{ex}$) due to pre-magnetization with an accuracy higher than in the resistor patterns 21, 31 and 41.

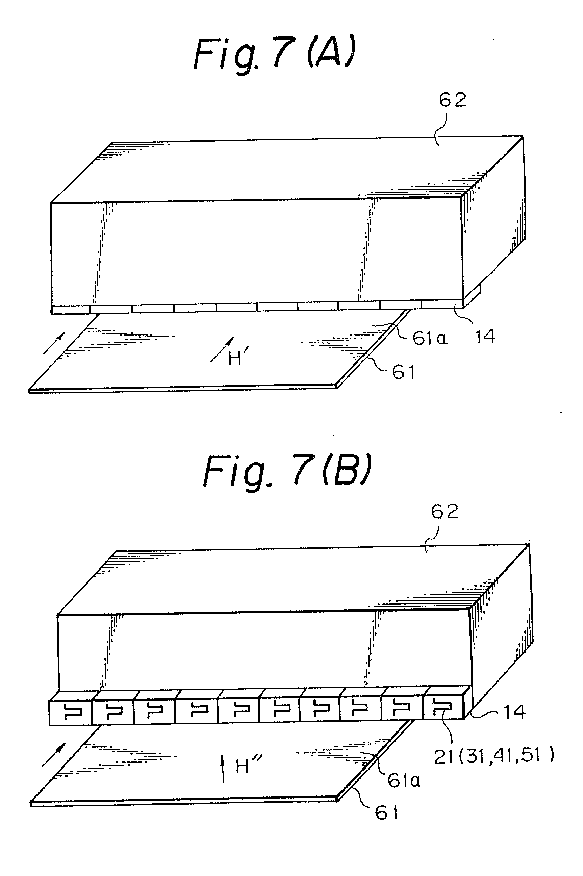

Fig. 7(A) shows a perspective view of a first magnetic pattern recognition device, having a plurality of magnetoresistive elements in a form of an array, embodying the present invention, and Fig. 7(B) shows a perspective view of a second magnetic pattern recognition device embodying the present invention.

In Fig. 7(A), a magnetic pattern is printed over a wide area of an upper face 61a of a recording medium 61. This magnetic pattern is then magnetized in a direction parallel to that of the upper face 61a and back and forth. Thus, the magnetic pattern on the recording medium 61 produces a magnetic field H' and the recording medium 61 is moved in the direction of the arrow towards a magnetic pattern detection head 62 by an appropriate guide means and a transfer means (not shown). At a bottom face of the magnetic pattern detection head 62 arranged above the recording medium 61, a plurality of (for example, ten in the Figure magnetoresistive elements 14 are fixed, and the magnetoresistive elements 14 provided with one of the above-mentioned resistor patterns 21, 31, 41, or 51 at the bottom face thereof forms a resistor element 27 (or 27 and 28) which is lengthened in a direction perpendicular to the transfer direction of the recording medium 61.

Such a device can recognize the magnetic pattern which is printed over a wide area of the upper face 61a of the recording medium 61. If the width W of the resistor pattern in the magnetoresistive element 14 is 1 mm, the magnetic pattern can be recognized over a distance of 1mm.

In Fig. 7(B), a magnetic pattern is printed on an upper face 61a of a recording medium 61 and the device detects that magnetic pattern which produces a magnetic field H'' which is magnetized in a direction perpendicular to the upper face 61a. A plurality of (for example, ten in the Figure) magnetoresistive elements 14 are fixed below a front face of the magnetic pattern detection head 62 and the above-noted resistor pattern 21 (or 31, 41, 51) is formed at a front face of the magnetoresistive element 14.

Such a device can recognize the magnetic pattern which is printed over a wide area of the upper face 61a of the recording medium 61. If the width W of the resistor pattern in the magnetoresistive elements 14 is 1 mm, the magnetic pattern can be recognized over a distance of 1 mm.

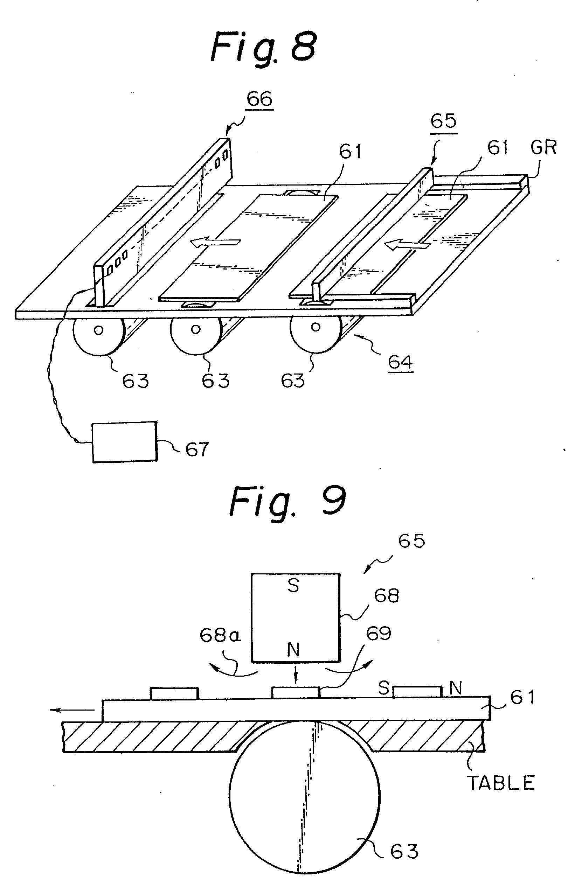

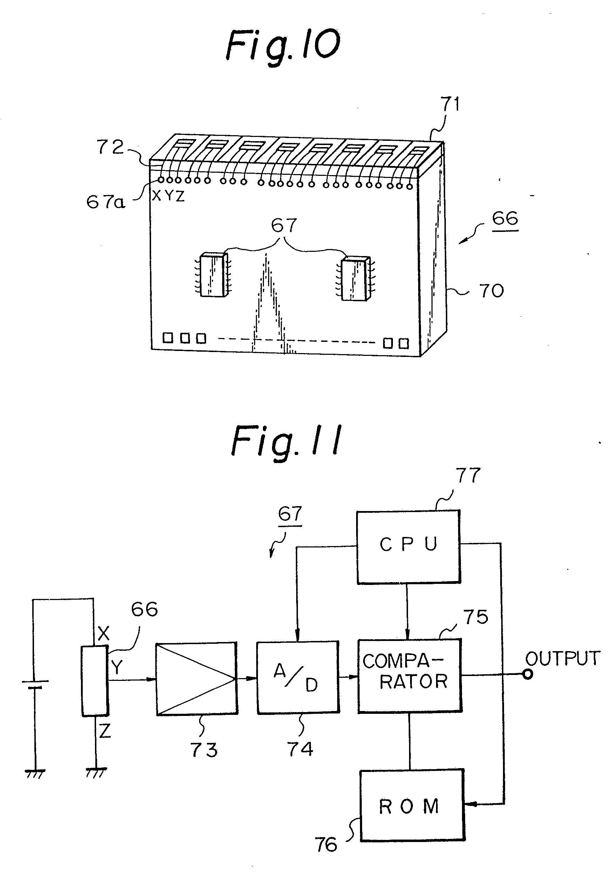

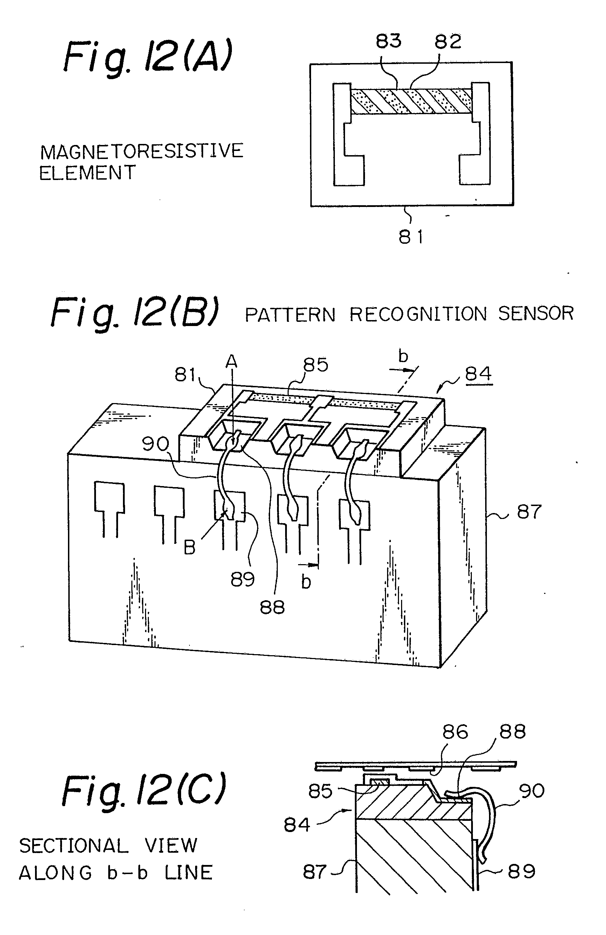

Figs. 8 to 11 are diagrams showing a third magnetic pattern recognition device embodying the present invention. Fig. 8 shows a perspective view of the device, Fig. 9 a diagram showing magnetizing means for the device, Fig. 10 a perspective view of the magnetic sensor, and Fig. 11 a block diagram showing an output signal processing circuit.

The magnetic pattern recognition device, as an embodiment of the present invention, includes: transfer means 64 having a plurality of rollers 63 for transferring a recording medium 61; magnetizing means 65 for magnetizing a magnetic pattern printed on the recording medium; a magnetic sensor 66 for detecting the magnetized magnetic pattern; and a signal processing circuit 67 for processing an output signal from the magnetic sensor 66.

Fig. 9 shows the above-noted magnetizing means 65 which is constituted by a permanent magnet 68 magnetized vertically with respect to the transfer direction of the recording medium 61 and a magnetic pattern 69 on the recording medium 61 is magnetized by the magnetic lines of force 68a.

Fig. 10 shows the above-noted magnetic sensor 66, in which a plurality of barber-pole type magnetoresistive elements 71 are mounted in an array on the side of the end portion of an aluminium substrate 70 formed an insulation layer on the surface. A signal processing circuit 67 is provided on the surface of the substrate 70 and a part between a terminal 67a and a terminal of the magnetoresistive element 71 is connected electrically by means of Ag paste or wire bonding means 72.

Fig. 11 is a circuit diagram of the signal processing circuit 67. In the signal processing circuit 67, an amplifier 73, an analog-to-digital convertor 74, a comparator 75 and a CPU 77 are connected to the magnetic sensor 66, in that order, and in addition a ROM 76, which stores a given magnetic pattern, is connected to the CPU 77.

In an embodiment of the present invention as constituted above, a magnetic pattern 69 on the recording medium 61, which is transferred by the roller 63, is magnetized by the permanent magnet 68, then the magnetized magnetic pattern is read by a magnetic sensor 66 and the read-out signal is sent to a signal processing circuit 67, where the output of the processing circuit is compared with a magnetic pattern previously stored in the ROM 76, so as to determine whether the recording medium 61, for example a bill or a check, is counterfeit or not.

In accordance with the embodiment of the present invention, since a signal processing circuit 67 and a magnetoresistive element 71 are provided on the same substrate, miniaturization can be effected easily. Furthermore, since a barber-pole type magnetoresistive element is employed, it can be mass-produced readily with uniform characteristics by utilizing a thin-film technique, and accurate detection of the magnetic pattern can be effected at high resolution by positioning the elements in a linear array. In addition, malfunction caused by the adhesion of dust can be prevented, as the magnetization portion is separated from the magnetic detection portion.

Fig. 12(A) shows a front elevational view of a previously-considered magnetoresistive element utilizing a ferromagnetic thin film. On a silicon substrate 81, a belt type thin film pattern 82 of NiFe alloy (of depth 30 to 100 nm, and width 10 to 200 μm) and a plurality of gold (Au) patterns 83 (of depth 200 to 600 nm) formed inclined in a longitudinal direction of the ferromagnetic thin film pattern 82 are provided therewith to form a barber pole type magnetoresistive element.

Fig. 12(B) shows a perspective view of the structure of a previously-proposed magnetic ink printed pattern recognition sensor and Fig. 12(C) a sectional view along line b-b in Fig. 12(B). Since it is desired that the magnetic ink printed pattern recognition sensor is made approach a ferromagnetic thin film pattern 85 of the magnetoresistive element 84 approach to a magnetic ink printed pattern 86 in order to enhance the detection sensitivity, the magnetic thin film pattern 85 is mounted at the end face of a printed board 87, which is positioned vertically with respect to the magnetic ink printed pattern.

In the package structure of such a previously-considered magnetoresistive element, when an electrode pad 88 of the magnetoresistive element 84 and a pad 89 of the printed board 87 are connected by a bonding wire 90, the bonding to the electrode pad 88 of the magnetoresistive element 84 must be effective from the direction of an arrow A and the bonding to the pad 89 of the printed board 87 from the direction of an arrow B. Therefore, it is necessary for the printed board 87 to provide a bonding jig for rotating it by 90 degrees , which has the disadvantage that the working becomes more complicated.

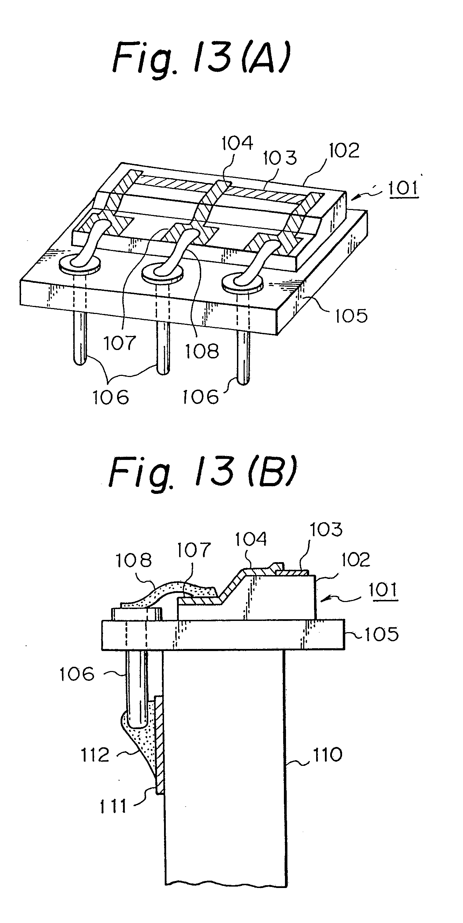

To solve these disadvantages, a magnetoresistive element embodying the present invention as shown in Fig. 13(A), is mounted on an insulating board 105 through which a plurality of terminals 106 are pierced vertically so as to be buried therein. The magnetoresistive element comprises a magnetoresistive chip 101 constituted by a silicon substrate 102 on which a magnetic thin film pattern 103 is formed, and having an electrode pad 107 electrically connected to the terminals 106 of the above-noted insulating board 105 by wire bonding or application of a conductive resin.

As a result, the magnetoresistive chip 101 is mounted on the insulating board 105 having the terminals 106 passed through it to be buried, to form a magnetoresistive element, the above-noted terminals 106 can be easily connected to the pad of the printed board and the magnetoresistive element is easily mounted on the end face of the printed board.

In Fig. 13(A), 104 denotes a leading electrode, and 107 a pad 117 of the leading electrode.

Fig. 13(B) is a sectional view of a magneto-resistive element of an embodiments of the present invention. The magnetoresistive element chip 101 is mounted on the insulating board 105 and the terminal 106 is connected electrically to the pad 111 of the printed board 110 by a solder or a conductive resin 112. Since the connection between the terminal 106 and the pad 111 of the printed board can be effected from one side of the printed board 110, the connection work can be carried out more easily, in comparison with the bonding from two directions as described in Fig. 12.

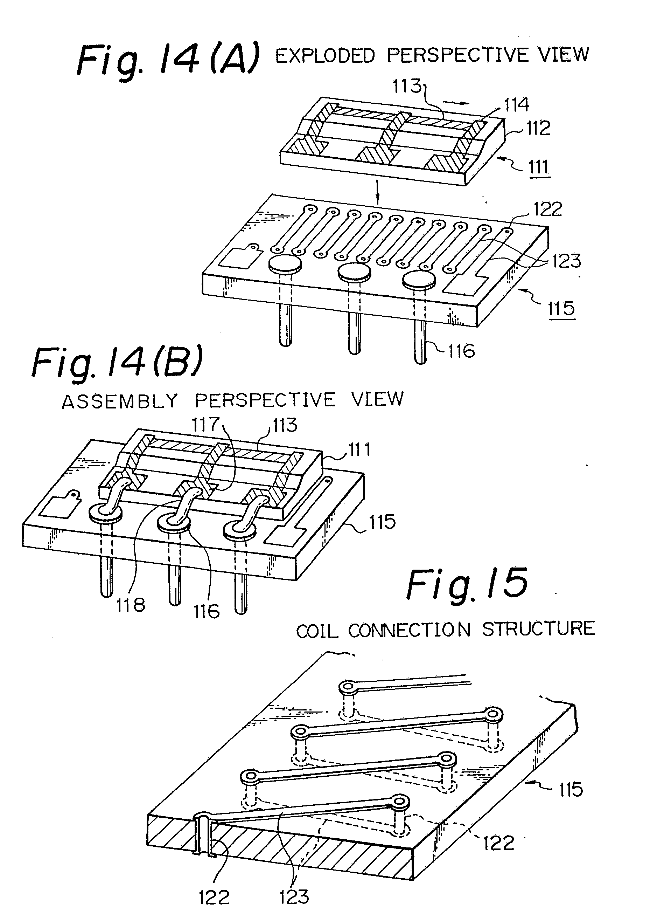

Fig. 14 is a view showing another embodiment of the present invention. Fig. 14(A) is an exploded perspective view and Fig. 14(B) an assembled perspective view of the embodiment.

Reference numeral 111 denotes a magnetoresistive chip having thereon a magnetic thin film pattern 113 and a leading electrode 114 on a glass or silicon substrate 112, and 115 an insulator substrate made of glass or epoxy resin. A plurality of terminals 116 are passed through to be buried therein along one side of the insulator substrate 115, and on both sides a coil pattern 123 connected by throughholes 122 is formed. As shown in Fig. 14(B), the magnetoresistive chip 111 is mounted on the insulator substrate 115 and the connection between a pad 117 of the leading electrode and a terminal 116 of the insulator substrate is carried out electrically by a bonding wire or conductive resin 118.

As is the same as the former embodiment, the present embodiment can also be packaged at the end face of the printed board with ease. As shown in Fig. 15 current flows through a coil pattern 123 formed on the insulator substrate 115, to produce a magnetic field and the magnetic thin film pattern 113 is magnetized to confer an anisotropy field, so the efficiency of magnetism detection can be improved. The initialization of a magnetic field is referred to as "initialize". One piece of insulator substrate 115 formed a coil pattern 123 is employed, but a plurality of connector connection of the insulator substrates can be applied to enhance the producing magnetic field.

An improvement of the magnetic pattern recognition device will be applied to the method of magnetization thereinafter.

In general, as a generation method of a magnetic field for magnetizing a magnetic material, a Helmholtz coil is well known which utilizes a magnetic field that current flow forms. When a magnetic pattern is magnetized up to an order of milli-oersted, it is necessary to supply a large amount of electric power for which a 1000 Oe order of magnetic field is generated. As a result, it is disadvantageous that the scale of the magnetic pattern recognition device should be made larger due to the magnetization means.

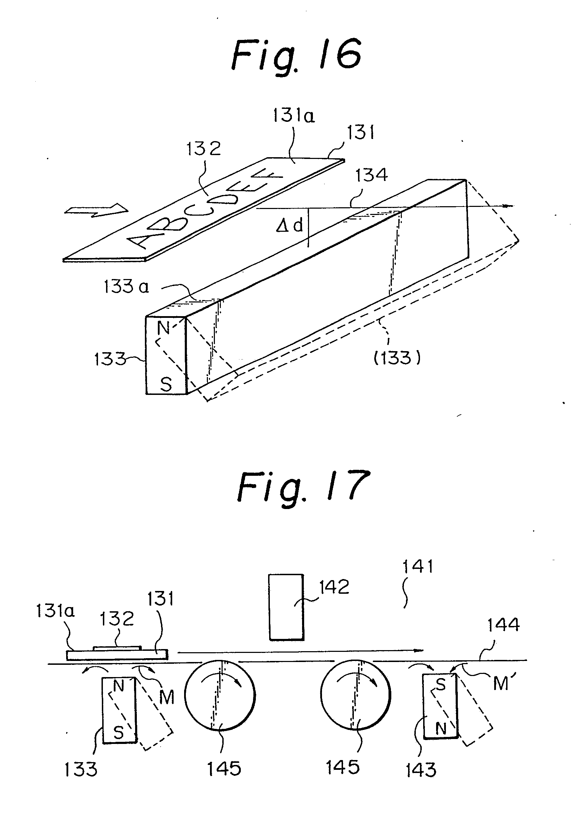

Fig. 16 shows a perspective view of another magnetic pattern recognition device embodying the present invention.

A magnetic pole face 133a of a permanent magnet 133 faces a medium 131 on which a magnetic pattern 132, such as the characters A, B, C, D, E, F, is formed, and the medium 131 or the permanent magnet 133 is moved in the direction of the arrow shown to magnetized the magnetic pattern 132 in a direction parallel to that of the face 131a on which the synthetic pattern 132 is printed. In the illustration, the permanent magnet 133 is tilted towards the face 131a of the magnetic pattern 132 as shown by a broken line, that is the magnetic pole face 133a is tilted in a reverse direction with a transfer direction of the arrow 134.

By moving either the medium on which the magnetic pattern is formed or the permanent magnet, the magnetic pattern is magnetized by fluxes of the magnet, and so it is possible to magnetize the magnetic pattern easily at a low cost without use of electric power for magnetization and requiring less space. In the case of demagnetization, it is easily effected by arranging the same scale of demagnetization magnet as the magnetizing permanent magnet.

Fig. 17 is a diagram showing the main structure of the magnetic pattern recognition device shown in Fig. 16.

The magnetic pattern recognition device 141 includes a magnetoresistive element 142 forming a magnetic detection pattern of a ferromagnetic material, a permanent magnet 133 for magnetization, and a pair of feed rollers 145 for transferring a medium 131 along a guide plane 144. For example, when a magnetic pattern 132 formed on an upper face of a paper medium 131 passes over the permanent magnet 133, the magnetic pattern is magnetized by the magnetic flux M of the permanent magnet 133. After the magnetized magnetic pattern 132 has been detected by passing beneath the magnetoresistive element 142, the magnetic pattern is passed over another permanent magnet 143 producing a magnectic flux M′ by which it is demagnetized. Preferably, the permanent magnets 133 and 143 are respective oxide magnets or compound magnets having a high coercive force.

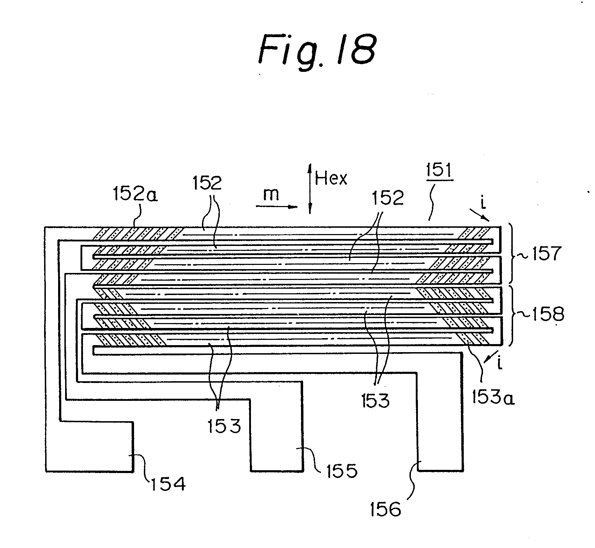

Fig. 18 is a plan view showing an example of a resistor pattern of the magnetoresistive element utilized in the present invention. For example, a resistor pattern 151 formed on a silicon substrate in which an oxide film is grown, has a structure that each plural magnetic detection portion (a magnetic detection pattern) 152, 153 and external connection terminals 154, 155 and 156 are integrally connected.

A resistor portion 157 which a plurality (for example, four as shown in the figure of magnetic detection portions 152 are connected in a zigzag form, is connected to a terminal 154 at one end. The other end of the resistor portion 157 is connected with both a terminal 155 and a resistor portion 158 which a plurality of magnetic detection portion 153 is connected in a zigzag form, and a terminal 156 is connected with the other end of the resistor portion 158.

On a resistor pattern 151 in which a conductor (for example, gold) thin film is laminated on a ferromagnetic thin film such as permalloy to remove the conductor selectively, a part of the ferromagnetic pattern 152a, 153a expresses an inclined stripe and each magnetic detection portion 152, 153 forms an internal magnetization in a longitudinal direction.

The above noted conductor pattern is to let flow a bias current i through the magnetic material patterns 152a and 153a. Suppose that the inclination of the arrangement of the magnetic material patterns 152a, 153a be indicated by a conversely inclined 45°, the direction of current i through the magnetic detection portion 152 and that through the magnetic detection portion 153 are different from each other by 90 degrees, so the resistor pattern 151 forms a half-bridge that the outputs of the magnetic detection portions 152 and 153 are in opposite phase.

The resistor pattern 151 having such conductor pattern, is referred to as a barber-pole type and if a predetermined amount of current flows at terminals 154 and 156, and an external field $H_{ex}$ perpendicular to a longitudinal direction of the magnetic detection portions 152 and 153 is applied thereto, a change of resistance in the magnetic detection portions 152 and 153 due to an external field $H_{ex}$ is detected at the terminal 155, so the existence of the external field $H_{ex}$ can be detected by the change of resistance. Therefore, the external field $H_{ex}$ is equal to a magnetic field produced from the magnetic pattern 132 magnetized, it is seen that the resistor pattern 151 can detect the magnetic pattern 132.

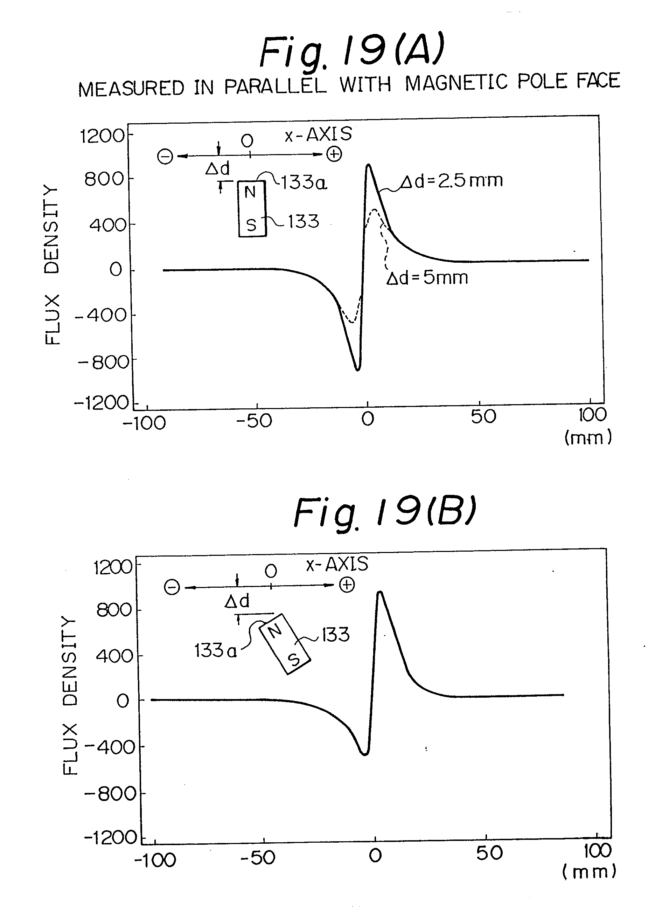

Fig. 19(A) is a diagram showing a characteristic curve of measured values of field distribution of a permanent magnet at a plane in parallel with a pole face of the magnet. The magnetic field distribution in a plane 135 apart from a north pole face 133a of rare earth cobalt magnet (a compound magnet) 133 by $\Delta d = 2.5$ mm, is shown by a solid line in the figure in X-axis direction in parallel with the plane 135, when a center axis of the width of the magnet 133 is a reference. Then, at a position a little distant in the width direction of the magnet 133 appear a plus peak and a minus peak of the flux density.

When the magnetic pattern 132 in the device of Fig. 17 utilizing the plus peak in Fig. 19(A) is magnetized, first of all, after the magnetic pattern 132 is magnetized by the minus side field, it is necessary to magnetize by the plus side field for overcoming the former type of magnetization. For this reason, it is desirable that a plus side peak is as large as possible, and a minus side peak is as small as possible, but in a plane 135 in parallel with the N pole face 133a, a peak of the plus side and a peak of the minus side are of the same strength.

In Fig. 19(A), the flux density as shown in a broken line corresponds to the characteristic of field distribution when a plane 135 is apart from the N-pole face 133a by $\Delta d = 5$ mm, so the peak value shown by a broken line is, of course, reduced more than the peak value shown by a solid line.

Fig. 19(B) is a diagram showing a characteristic curve of measured values of field distribution of a permanent magnet at a plane inclined by 45 degrees to the pole face of the magnet (the magnet is inclined by 45 degrees to the measured face. As the magnetic field distribution in a plane 136 apart from an upper edge end of a north pole face 133a of rare earth cobalt magnet (a compound magnetic 133 by $\Delta d = 2.5$ mm, when a center axis of the width direction of the north pole face 133a is a reference, is shown by a solid line in the figure in X-axis direction in parallel with the plane 136, a plus peak and a minus peak of the flux density appear at a position a little distant in the width direction of the magnet 133. The peak value of the minus side has about a half strength with the peak value of the plus side.

When the field characteristic of Fig. 19(B) is applied to the device of Fig. 17, the magnetization of the magnetic pattern 132 can be effected with a conspicuous effect, since the flux density of a reverse direction (the peak of the minus side) for interrupting the magnetization is smaller than the flux density for magnetization (the peak of the plus side).

As an advanced feature of the device according to the present invention in order to discriminate an imitation article with high accuracy, it is desired that a recognition device for detecting the magnetic pattern and discriminating even a miniaturized pattern using a plurality of magnetic detector arranged in an array form is provided. For this reason, a miniaturized sensor using a ferromagnetic thin film magnetoresistive element (MR element) capable of mass-production is developed. When a uniform internal magnetization in a longitudinal direction is rotated by the external magnetic field, a feature which the resistance value changes is utilized.

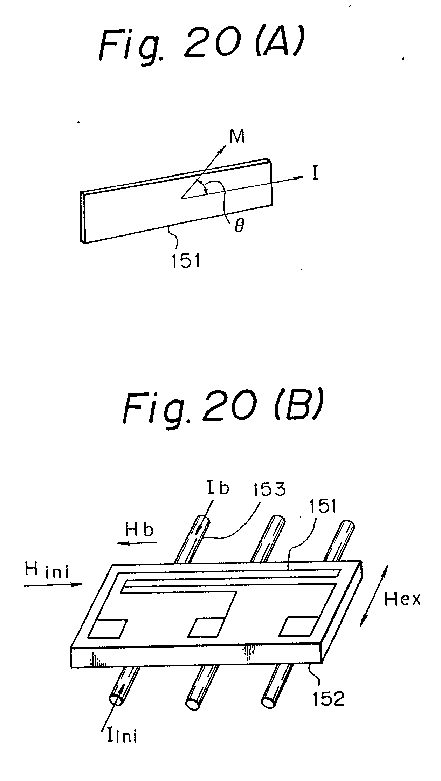

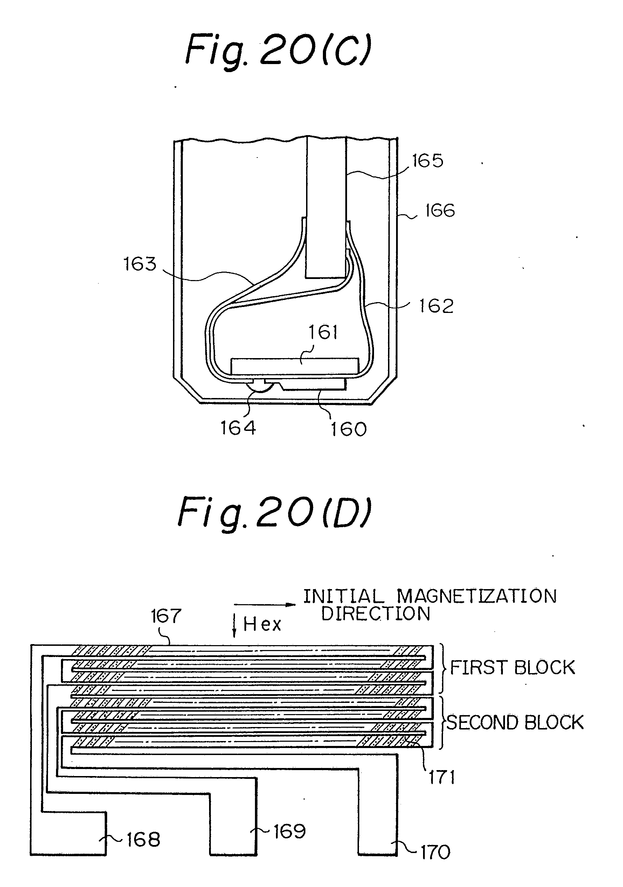

In a previously considered magnetic ink printed pattern recognition device, as shown in Fig. 20(A), the magnetic ink printed pattern is magnetized in advance, and a faint magnetic field produced from the magnetic pattern is detected by a ferromagnetic thin film MR element 151. In this case, as a resistance R of the MR element depends on a relative angle $\theta$ between a direction of magnetization M by the magnetic field from the magnetic printed pattern and a direction of current I flowed through a MR element 151.

Since the magnetic field produced from a magnetic ink printed pattern is very faint, it is necessary to enhance a sensitivity of the MR element to detect it. The relationship between a sensitivity S of the MR element, the width W of the MR element pattern and the film-depth t, is as follows:-

$$S \propto \frac{W}{t}$$

Therefore, if W is large and t small, it is possible to realize a high sensitivity of MR element. But to enlarge W is to make an area of the MR element large, and it is necessary for a value of t to be more than 30nm in order to keep the property as a film. Therefore, as there is a limit value for both W and t, it is not possible to improve the sensitivity infinitely. To solve the problem, an embodiment of the present invention will be described with reference to Fig. 20(B).

In Fig. 20(B), reference numeral 152 is a MR element chip in which a ferromagnetic magnetoresistive element 151 is formed and 153 a conductive pattern which a magnetic field can be applied in a longitudinal direction of the pattern of the MR element 151.

An instantaneous current for initial magnetization $I_{ini}$ is flown through the conductive pattern 153 to initial-magnetize the MR element 151 in the direction of $H_{ini}$ in advance, then current $I_b$ is flown through the conductive pattern 153 and a bias magnetic field $H_b$ is applied to an extent that the initial magnetization is not be inverted. As a result, the internal magnetization of the MR element pattern becomes liable to rotate with the external field $H_{ex}$, and the sensitivity is improved.

In Fig. 20(B), reference numeral 152 is a MR element chip which a ferromagnetic magnetoresistive element (MR element) 151 is formed, and 153 is a conductive element pattern which a magnetic field can be applied in a longitudinal direction of the pattern of the MR element 151.

When an initial magnetization instantaneous current $I_{ini}$ flows through the conductive pattern 153 to initial-magnetize the MR element 151 in a direction of $H_{ini}$ in advance, and then a bias current $I_b$ flows through the conductive pattern 153 to apply a bias magnetic field $H_b$ to an extent not to invert the initial magnetization, an internal magnetization of the pattern of the MR element is liable to rotate with an external magnetic field $H_{ex}$ and a sensitivity is raised.

Fig. 20(C) is an enlarged cross-sectional view of a magnetic sensor portion for detecting a magnetic pattern.

In Fig. 20(C), reference numeral 160 is a magnetoresistive element (MR element) which is mounted on a protective plate 161 by inserting a flexible printed board 162 for applying a bias magnetic field 163 is a flexible printed board for driving the MR element 160. One end of the flexible printed board 163 is wire-bonded by an electrode of the MR element 160 and a wire 164, and the other end is connected to a printed board 165 mounted a drive circuit.

Fig. 20(D) is an enlarged plan view illustrating the pattern of the MR element. The MR element has a structure that a resistor pattern 167 and external connection terminals 168, 169 and 170 are connected en bloc, and the resistor pattern 167 is formed on a silicon substrate which an oxide film is grown up. The resistor pattern 167 has a conductor 171 (for example, gold) formed in an inclined stripe form on a ferromagnetic thin film such as permalloy formed in a zigzag form.

In general, the resistor pattern 167 including a conductor pattern is referred to as a barber-pole type and after an initial magnetization is effected in a longitudinal direction of the resistor pattern 167 in advance, a predetermined amount of current is applied to the terminals 168 and 170. When the external field $H_{ex}$ which is perpendicular to a longitudinal direction of the resistor pattern 167 is applied, a change of the resistance in a first block and second block is detected from a terminal 169 and the existence of the external magnetic field $H_{ex}$ can be detected.

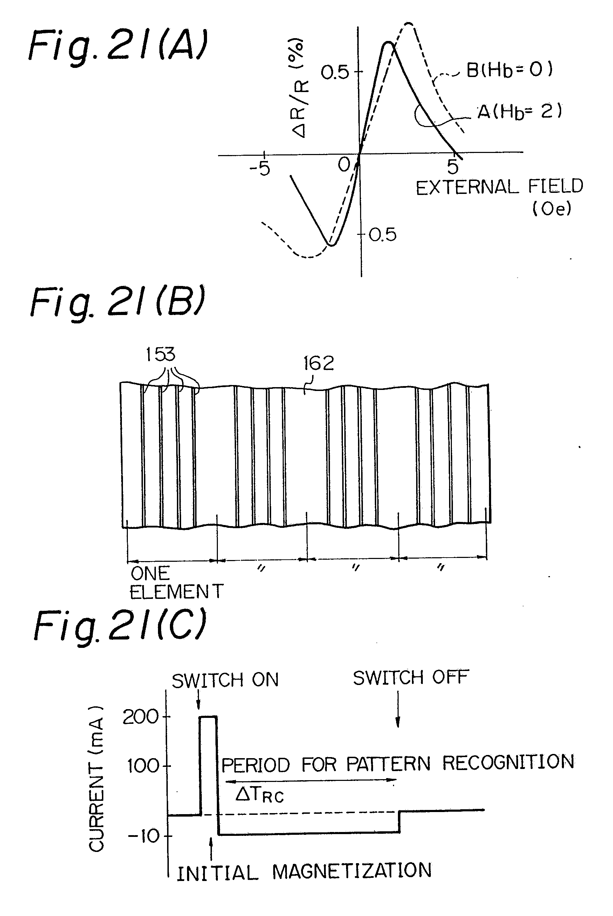

Fig. 21(A) is a characteristic curve showing the field strength of a detection magnetic field direction of the MR element and a change of resistance. In this case, the width of the pattern of MR element is 150 μm and the thickness of permalloy film is 30nm.

It is seen from Fig. 21(A) that a change of resistance with the same external field in a minute region of the field in a curve A where a bias field $H_b = 2$ Oe is applied is larger than that in a curve B where the bias field $H_b = 0$, that is, the output is larger. In an embodiment of the present invention, as shown in Fig. 21(B), a constant current of (-)40 mA flows through a conductive pattern arranged in a back face of the MR element (which is formed on the flexible printed board 162 in Fig. 20(C)) and a bias field $H_b = -2$ Oe is applied in the opposite direction of the initial magnetization to the MR element portion to detect a magnetic ink printed pattern.

On the other hand, since the MR element necessitates an initial magnetization process which arranges the magnetization in the MR element pattern in the same direction in advance before a detection of the magnetic ink printed pattern is effected, an instantaneous current of 200 mA is flown through the conductive pattern 153 in a case of switching-in as shown in Fig. 21(C). Therefore, the magnetic field of about 10 Oe is produced to be able to effect an initial magnetization. After a pulse current of 200 mA for the initial magnetization is flown, a recognition of the magnetic pattern is carried out for a time of $\Delta T_{RC}$ having a slow return characteristic of a trailing waveform. When an operation of pattern recognition is finished, the switch is turned off.

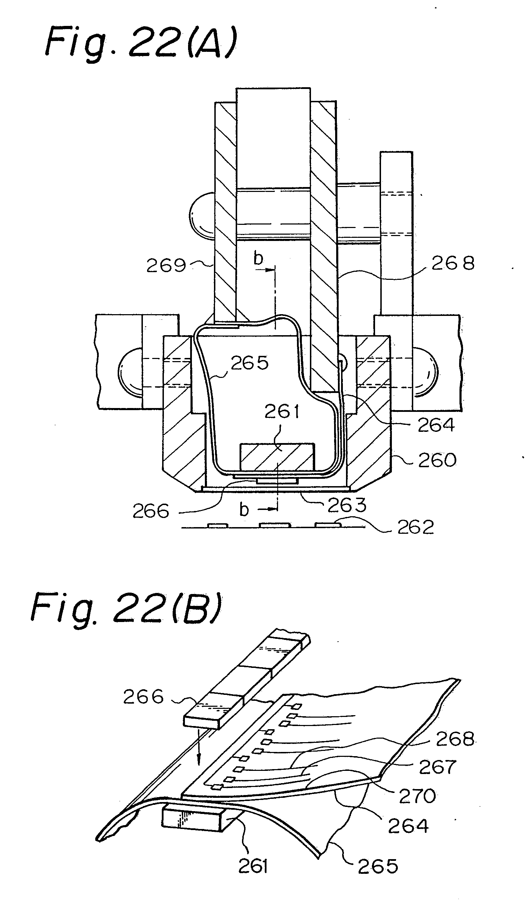

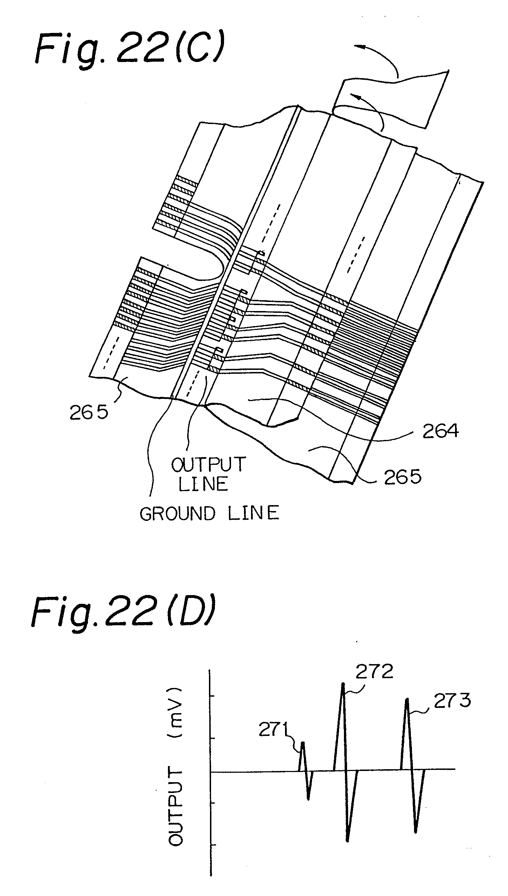

Fig. 22(A) is a cross-sectional view showing another embodiment of a magnetic sensor including a magnetoresistive element. In Fig. 22(A), a magnetoresistive element mount table 261 which is made of a high permeability material such as an iron-nickel alloy and an element protective plate 263 arranged to face a magnetic ink pattern 262 are provided in a holder 260. On the element mount table 261 are provided a magnetoresistive element 266 through a first flexible printed board 264 for input/output use in a magnetoresistive element and a second flexible printed board 265 for the application of magnetic field. One terminal of the first flexible printed board 264 is connected to an electrode of the magnetoresistive element 266 and the other terminal to a printed board 268 for a magnetic detection circuit. Both terminals of the second flexible printed board 265 for a coil are connected to a printed board 269 for a drive circuit.

Fig. 22(B) is a perspective view when a flexible printed board is spread, and Fig. 22(C) is a front view of a printed board of Fig. 22(B).

Fig. 22(D) is a waveform diagram showing an output characteristic of the magnetoresistive element. In Fig. 22(D), a waveform 261 shows an output characteristic from a previously-proposed device in which an internal magnetization direction is disturbed by a disturbance, a waveform 272 an output characteristic of an embodiment of the present invention when an initial magnetization is effected, and a waveform 273 an output characteristic when the element mount stand 261 is made of a non-high-permeability material. From Fig. 22(D), it is seen that the present embodiment offers a good output characteristic by the initial magnetization and an effect of a shield member.

**Claims**

1. Apparatus for comparing a printed pattern (61a) with a preselected set of standard patterns, the said pattern (61a) being printed in magnetizable ink, characterised by magnetizing means (65) for subjecting the said pattern (61a) to a predetermined magnetizing field, conveying means (64) for causing the magnetized pattern (61a) to be scanned by a magnetic-field sensing device (66) of the apparatus, and signal processing means (67) for employing output signals delivered by the magnetic-field sensing device (66), during such scanning, to effect the required comparison.

2. A magnetic ink printed pattern recognition device for transferring a recorded medium printed a magnetic pattern in magnetic ink, said device comprising:
transfer means for transferring the recorded medium printed a magnetic pattern to be detected in magnetic ink;
magnetizing means for magnetizing said magnetic pattern on said recorded medium;
magnetic sensing means for detecting a magnetic field of said magnetic pattern magnetized by said magnetizing means.

3. A device according to claim 2, wherein there is provided a means for detecting a magnetic field of said magnetic pattern by a magnetoresistive element in which a ferromagnetic magnetic pattern is formed, after said magnetic pattern is magnetized by said magnetizing means in a nearly parallel direction with a forming plane of said magnetic pattern.

4. A device according to claim 2, wherein there is provided a means for detecting a magnetic field of said magnetic pattern by a magnetoresistive element in which a ferromagnetic magnetic pattern is formed, after said magnetic pattern is magnetized by said magnetizing means in a nearly vertical direction with a forming plane of said magnetic pattern.

5. A device according to claim 2, 3 or 4, wherein said magnetic sensor includes a plurality of magnetoresistive elements arranged in an array.

6. A device according to any one of claims 2 to 5, wherein an output signal processing circuit for processing the output signal from said magnetic sensing means is formed on the same substrate as said magnetic sensing means.

7. A device according to any one of claims 2 to 6, wherein a conductive pattern for producing a biasing magnetic field perpendicular to a magnetic field to be detected is provided on a magnetoresistive element chip, and after an instantaneous current is flown in a longitudinal direction of said conductive pattern and an initial magnetization is effected in advance, a magnetic pattern printed in magnetic ink is recognized.

8. A device according to claim 7, wherein the device further includes means for applying a faint biasing magnetic field to said magnetoresistive element by flowing an instantaneous current for an initial magnetization through said conductive pattern and by flowing always a faint current in an opposite direction to said instantaneous current, and when a faint biasing magnetic field is constantly applied thereto, a magnetic field from the magnetic ink printed pattern is detected.

9. A magnetoresistive element for detecting a magnetic pattern comprising:
a magnetoresistive element chip mounted on said element, said chip including:
a plurality of terminals;
an insulating board penetrating said terminals vertically to be buried;
a substrate made of glass or silicon, arranged on said second insulating board; and
a magnetic thin film pattern formed on said second insulating board,
wherein a part between an electrode pad of said magnetoresistive element chip and a terminal of said insulating board is connected electrically by wire bonding.

10. A magnetoresistive element according to claim 9, wherein said magnetoresistive element includes a magnetic thin film pattern formed on a glass or silicon substrate and a step is provided on an electrode pad portion of said magnetoresistive element chip to depress thereof more than a face of said magnetic pattern.

11. A magnetoresistive element according to claim 9, wherein said element includes a coiled flexible printed board connected by a through-hole and is mounted on said flexible printed board.

12. A magnetoresistive element according to claim 11, where a high permeability material is arranged inside said coiled flexible printed board.

13. A magnetic ink printed pattern recognition device comprising:
a magnetoresistive element;
a coil means for applying a magnetic field to said magnetoresistive element;
a magnetoresistive mount stand having a shielding member formed by a high permeability member.

14. A magnetoresistive element according to claim 12, wherein the element includes a substrate having a plurality of terminals, a flexible printed board soldered by said terminal, a second substrate of glass or silicon arranged on said flexible printed board, a magnetoresistive element chip having a magnetic thin film pattern formed on said second substrate, and a part between an electrode pad of said magnetoresistive element chip and terminals of said flexible printed board is connected electrically by wire-bonding.

15. A magnetoresistive element device according to claim 9 or claim 10, wherein conductive patterns for a coil connected by a through-hole are formed on both faces of an insulating board to be mounted thereon.

16. A device according to any one of claims 2 to 15, wherein a barber-pole type magnetoresistive detection element includes at least one coil-winding type or a magnetic thin film type zigzag pattern and a plurality of conductive pattern mounted with a predetermined inclination of angle.

# Fig. I (A)

MAGNETIC PATTERN DETECTOR

# Fig. I (B)

PRINCIPLE

## Fig. 2 (A)

PATTERN FORMING
FACE 13
MAGNETIC
PATTERN 11

11     11

N S   N S   N S

(RECORDING MEDIA) 12

## Fig. 3 (A)

MAGNETIC
PATTERN 15     15   13   15

N     N     N
S     S     S

(RECORDING MEDIA) 12

## Fig. 2 (B)
PARALLEL DIRECTION

14                    H'

N S   N S   N S

## Fig. 3 (B)
VERTICAL DIRECTION

14              H"

N     N     N
S     S     S

## Fig. 2 (C)

OUTPUT (Oe)

0.1            A

O

## Fig. 3 (C)

OUTPUT

B

O

*Fig. 4*

*Fig. 5 (A)*

*Fig. 5 (B)*

EP 0 342 062 A2

Fig. 6 (A)

Fig. 6(C)

Fig. 6 (B)

Fig. 6 (D)

# Fig. 7 (A)

# Fig. 7 (B)

# Fig. 8

# Fig. 9

# Fig.10

# Fig.11

# *Fig. 12(A)*

MAGNETORESISTIVE
ELEMENT

83  82

81

# *Fig. 12(B)*   PATTERN RECOGNITION SENSOR

81   A   85   b   84

90

87

89   88   b

B

# *Fig. 12(C)*

SECTIONAL VIEW
ALONG b-b LINE

86   88

85   90

84

87   89

# Fig. 13 (A)

# Fig. 13 (B)

## Fig. 14 (A)  EXPLODED PERSPECTIVE VIEW

## Fig. 14 (B)

ASSEMBLY PERSPECTIVE VIEW

## Fig. 15

COIL CONNECTION STRUCTURE

## Fig. 16

## Fig. 17

# Fig. 18

EP 0 342 062 A2

## *Fig. 19 (A)*

### MEASURED IN PARALLEL WITH MAGNETIC POLE FACE

## *Fig. 19 (B)*

# Fig. 20 (A)

# Fig. 20 (B)

# Fig. 20(C)

# Fig. 20(D)

# Fig. 21(A)

# Fig. 21(B)

# Fig. 21(C)

## Fig. 22(A)

269    b    268

265

261

266    b    264

260

263    262

## Fig. 22(B)

266    268

267

270

264

261    265

# Fig. 22(C)

265

264

265

OUTPUT
LINE

GROUND LINE

# Fig. 22(D)

OUTPUT (mV)

271

272

273